Europäisches Patentamt

(19) European Patent Office

Office européen des brevets

(11) **EP 0 865 182 A2**

(12) **EUROPEAN PATENT APPLICATION**

(43) Date of publication:
**16.09.1998 Bulletin 1998/38**

(51) Int. Cl.$^6$: **H04L 27/20**

(21) Application number: **98104174.2**

(22) Date of filing: **09.03.1998**

(84) Designated Contracting States:
**AT BE CH DE DK ES FI FR GB GR IE IT LI LU MC NL PT SE**
Designated Extension States:
**AL LT LV MK RO SI**

(30) Priority: **11.03.1997 JP 55940/97**

(71) Applicant: **NEC CORPORATION Tokyo (JP)**

(72) Inventor: **Iwasaki, Motoya Minato-ku, Tokyo (JP)**

(74) Representative:
**VOSSIUS & PARTNER Siebertstrasse 4 81675 München (DE)**

(54) **Method and apparatus for orthogonal frequency conversion**

(57) In an orthogonal frequency conversion apparatus in which an orthogonal frequency converter for the baseband is connected with that for an IF band or an RF band, spurious noise on a transmitter side and deterioration caused by an interference signal on a receiver side are both reduced, even though the orthogonal frequency converter for the IF band or the RF band has an error in phase/amplitude. On the transmitter side, two orthogonal input data are frequency-converted by the transmission baseband frequency converter and thereafter further frequency-converted by the transmission radio/intermediate frequency converter to obtain a signal m. The signal m is then input to the band-pass filter which passes a frequency ($\omega+\omega_0$) but attenuates ($\omega-\omega_0$) in order to obtain a signal m' in which the spurious component is reduced. On the receiver side, an input signal d is first input to the band-pass filter which passes a signal having a frequency ($\omega$) but attenuates the frequency $\omega-2(\omega-\omega_1)$ to obtain an output d' in which the interference signal component is removed in advance. Subsequently, two signals which have been frequency-converted by the received radio/intermediate frequency converter are passed through the LPF and thereafter frequency-converted by the receiver baseband frequency converter.

(RF/IF SIGNAL)                    (BB SIGNAL)

TRANSMITER SIDE

Figure 6

## Description

The present invention generally relates to a method and apparatus for orthogonal frequency conversion, and more particularly relates to a method and apparatus for frequency-converting and modulating orthogonal baseband (BB) data to an orthogonal modulation signal in a high frequency band and for frequency-converting and demodulating the orthogonal modulation signal to the orthogonal BB data.

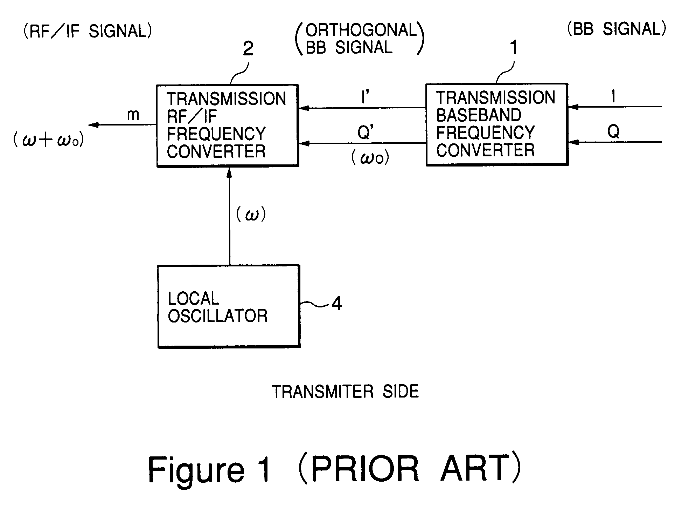

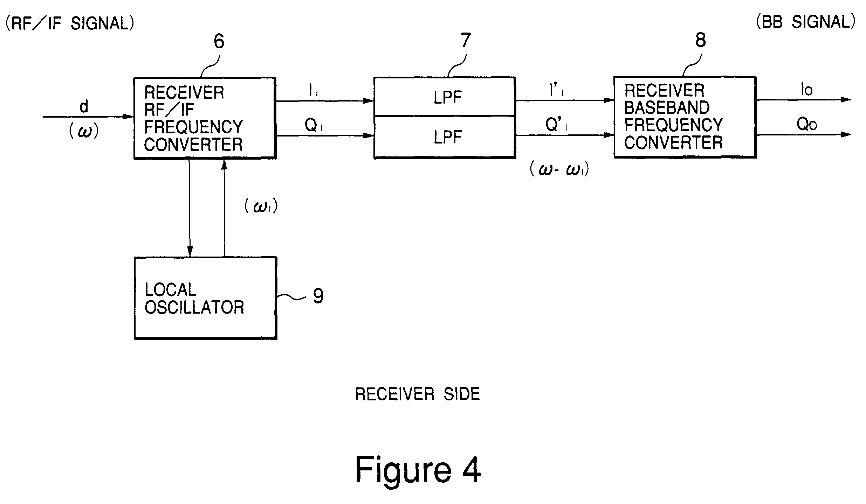

Figures 1 and 4 are block diagrams showing a configuration of a prior art orthogonal frequency conversion apparatus.

Here, Figure 1 shows the system for modulating the BB data digitally at a radio high-frequency band (RF) or an intermediate frequency band (IF) after once carrying out frequency conversion in an orthogonal baseband data (BB).

Figure 4 shows the system for demodulating the modulated signal to the BB data.

Figure 1 illustrates a conventional technique for the orthogonal frequency conversion apparatus on the transmitter side. Two transmission orthogonal baseband data, which are expressed as an in-phase data ( I ) and a quadrature data ( Q ) ordinally, are first subjected to orthogonal frequency conversion based on a frequency $\omega0$ using a transmission baseband frequency converter 1.

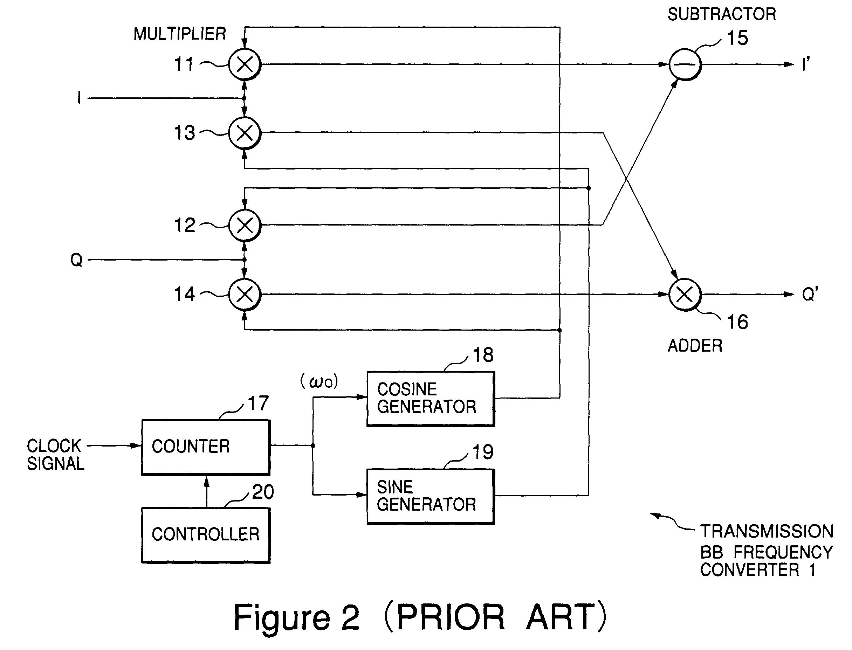

Figure 2 shows a block diagram of the transmission BB frequency converter 1. The transmission BB frequency converter 1 includes four multipliers 11-14, a subtractor 15, an adder 16, a counter 17, a cosine generator 18, a sine generator 19 and a controller 20. A clock signal is supplied to the counter 17 and the counter 17 generates a divided clock signal of a predetermined frequency $\omega0$. The frequency of the divided clock signal is controlled at small steps by a controller 20. The output of the counter 17 is applied to the cosine generator 18 and the sine generator 19. An output of the cosine generator 18 is multiplied with the input data I by the multiplier 11. An output of the sine generator 19 is multiplied with the input data Q by the multiplier 12. An output of the multiplier 11 is subtracted from an output of the multiplier 12 by the subtractor 15. Data I' is obtained by an output of the subtractor 15.

Similarly, data Q' is obtained by an output of the adder 16 which adds an output of the multiplier 13 to an output of the multiplier 14.

In the above description, orthogonal data I' and Q' are expressed by Equation (1).

$$I' = I\cos\omega_0 t + Q\sin\omega_0 t \qquad (1)$$

$$Q' = Q\cos\omega_0 t - I\sin\omega_0 t$$

Subsequently, as shown in Figure 1, the orthogonal BB data I' and Q' are orthogonally frequency-converted into a radio frequency band or an intermediate frequency band signal (RF/IF signal) based on an output having a frequency from a local oscillator 4 in the transmission RF/IF frequency converter 2.

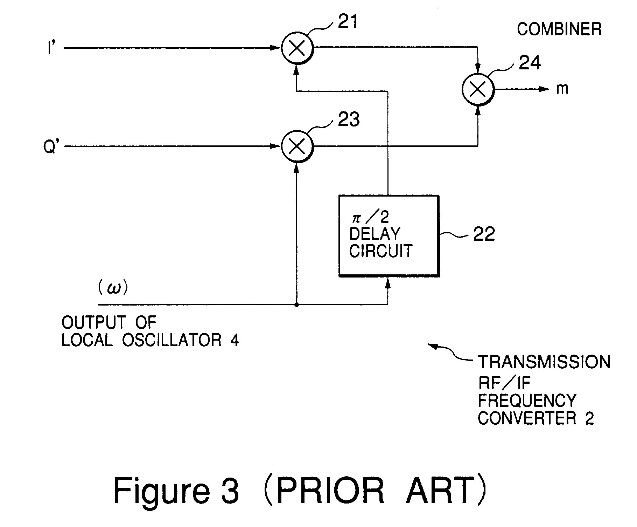

Figure 3 shows a block diagram of the transmission RF/IF frequency converter 2. This configuration represents a general configuration of a four-phase (quadri-phase) phase-shift-keyed (QPSK) modulator as an example of the orthogonal frequency conversion.

That is, the data I' is multiplied with an output of a $\pi/2$ delay circuit 22 connected to an output of a local oscillator 4 by the multiplier 21. The data Q' is similarly multiplied with an output of the local oscillator 4 by a multiplier 23. Outputs of the multipliers 21 and 23 are combined by a combiner 24.

An output signal (m) of the combiner 24 is a signal frequency-converted and modulated digitally.

The output m can be expressed by Equation (2).

$$m = I'\cos\omega t + Q'\sin\omega t \qquad (2)$$
$$= I\cos(\omega+\omega_0)t + Q\sin(\omega+\omega_0)t$$

In this manner, the transmitting frequency can be adjusted by changing the conversion frequency $\omega0$ in the baseband according to this system.

On the other hand, Figure 4 illustrates a conventional technique for the orthogonal frequency conversion apparatus on the receiver side. In Figure 4, a modulated input signal d is first subjected to the orthogonal frequency conversion in a radio or an intermediate frequency band. The receiver RF/IF frequency converter 6 frequency-converts and demodulates the modulated input signal to a baseband orthogonal data I1 and Q1 by using a local oscillator 9 having a frequency $\omega_1$.

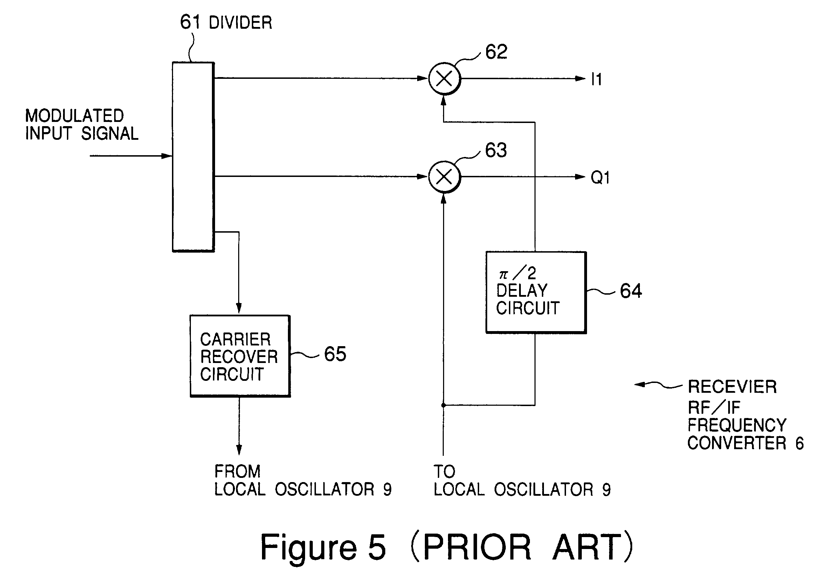

Figure 5 is a block diagram of the receiver RF/IF frequency converter 6. Figure 5 represents a configuration of a QPSK demodulator as an example of the receiver RF/IF frequency converter 6. In Figure 5, an orthogonally modulated input signal d is applied to a divider 61. The two modulated input signals divided by the divider 61 are multiplied with two outputs of the local oscillator 9 which have a $\pi/2$ phase difference each other. A $\pi/2$ delay circuit 64 generates the

$\pi/2$ phase difference. Outputs of the multipliers 62 and 63 are demodulated to orthogonal data I1 and Q1. A carrier recovery circuit 65 detects a carrier signal contained in the modulated input signal and provides a phase difference for a synchronous detection by a phase locked loop (PLL). An output of the carrier recovery circuit 65, which provides an information of the phase difference of the carrier, is applied to the local oscillator 4.

In the above description, the signals of Figure 5 are represented by Equation (3).

$$d = I\cos\omega t + Q\sin\omega t$$

$$I_1 = d\cos\omega_1 t = \{I\cos(\omega-\omega_1)t + Q\sin(\omega-\omega_1)t\}/2$$

$$Q_1 = d\sin\omega_1 t = \{Q\cos(\omega-\omega_1)t - I\sin(\omega-\omega_1)t\}/2 \qquad \ldots(3)$$

Here, the above equation expresses the state after elimination of a high frequency component of $(\omega+\omega_1)$ by a LPF (low-pass filter) 7 as shown in Figure 4. A receiver BB frequency converter 8 for the baseband subsequently performs frequency conversion on the two orthogonal data I1 and Q1 based on a frequency $\omega B = \omega - \omega 1$. Finally, the original data I and Q are obtained as shown by Equation (4).

$$I_0 = I_1\cos\omega_B t + Q_1\sin\omega_B t = I \qquad (4)$$

$$Q_0 = Q_1\cos\omega_B t + I_1\sin\omega_B t = Q$$

In this way, the receiving frequency $\omega = \omega B + \omega 1$ can be varied by changing the conversion frequency $\omega B$ in the baseband according to this system.

According to this double frequency conversion system, frequency adjustment can be made easily by using a frequency synthesizer in both the baseband frequency converter and the RF/IF frequency converter. In particular, frequency conversion can be performed in extremely small steps since the frequency conversion in the baseband can be performed by the digital signal processing (DSP), and the step intervals of the frequency synthesizer can be advantageously set farther apart in the radio/intermediate band.

The orthogonal frequency conversion operates as in the above description when the phase/amplitude characteristic of the orthogonal frequency converter in the radio section is ideal. However, in practice there is always a phase error $\theta$ or an amplitude error $\alpha$. Taking into account these errors, the following problems occur on both the transmitter and receiver sides.

Assuming that a phase error of the orthogonal frequency converter 2 in the radio section is $\theta$ and an amplitude error of the same is $\alpha$, an output from the orthogonal frequency converter 2 on the transmitter side can be expressed by Equation (5).

$$m = I'\cos\omega t + (1+\alpha)Q'\sin(\omega t + \theta) \qquad (5)$$
$$\doteqdot I\cos(\omega+\omega_0)t + Q\sin(\omega+\omega_0)t + \{(-I\alpha+Q\theta)/2\}\cos(\omega-\omega_0)t + \{(I\alpha+Q\theta)/2\}\sin(\omega-\omega_0)t$$

In this manner, there is a problem in that generation of the component (the second term of Equation (5)) of the frequency $(\omega-\omega_0)$ disadvantageously causes spurious noise to occur.

Outputs from the orthogonal frequency converter 6 on the receiver side can be expressed by Equation (6).

$$I1 = d\cos\omega_1 t$$

$$= \{I\cos(\omega-\omega_1)t + Q\sin(\omega-\omega_1)t\}/2$$

$$Q1 = d(1+\alpha)\sin(\omega_1 t + \theta)$$

$$= \{Q[(1+\alpha)\cos(\omega-\omega_1)t - \theta\sin(\omega-\omega_1)t]$$

$$-I[(1+\alpha)\sin(\omega-\omega_1)t - \theta\cos(\omega-\omega_1)t]\}/2 \qquad \ldots(6)$$

The following equation can be obtained by similarly frequency-converting the above outputs in the baseband as Equation (4).

$$I_0 \doteqdot I-\{(I\alpha+Q\theta)/2\}\cos2(\omega-\omega_1)t -\{(I\theta+Q\alpha)/2\}\sin2(\omega-\omega_1)t \qquad (7)$$

$$Q_0 \doteqdot Q-\{(I\alpha+Q\theta)/2\}\sin2(\omega-\omega_1)t +\{(I\theta+Q\alpha)/2\}\cos2(\omega-\omega_1)t$$

The input signal having the frequency $\omega$ is partially converted into the frequency $2(\omega-\omega_1)$ as well as 0 Hertz. This also means that the input signal having the frequency $\omega-2(\omega-\omega_1)$ is frequency-converted to 0 Hertz. When the high-level interference signal exists in the frequency $\omega-2(\omega-\omega_1)$, when the interference signal overlaps on a desired signal having the frequency $\omega$ in the baseband, thus deteriorating the receiving characteristic.

As described above, an object of the present invention is to reduce an amount of the spurious noise on the transmitter side even though there is an error in the phase/amplitude of the orthogonal frequency converter In the radio/intermediate section and to reduce deterioration caused by the interference signal on the receiver side.

The orthogonal frequency conversion apparatus and method according to the present invention is characterized as below.

On the transmitter side, two orthogonal input data are frequency-converted by the transmitter baseband (BB) frequency converter and thereafter further frequency-converted by the transmitter radio/intermediate (RF/IF) frequency converter to obtain a modulated signal m. The modulated signal m is then input to a band-pass filter which passes a signal of the frequency ($\omega+\omega_0$ but attenuates a signal of a frequency ($\omega-\omega_0$ in order to obtain a signal m' in which the spurious component is reduced.

On the receiver side, a modulated input signal d is first input to the band-pass filter which passes a signal having a frequency ($\omega$) but attenuates the frequency $\omega-2(\omega-\omega_1)$ to obtain an output d' in which the interference signal component is removed in advance. Subsequently, two orthogonal data which have been frequency-converted by the received RF/IF frequency converter to obtain a demodulated signal are passed through the LPF and thereafter frequency-converted by the receiver BB frequency converter.

The foregoing and other objects, aspects and advantages will be better understood from the following detailed description of a preferred embodiment of the invention with reference to the drawings, in which:

Figure 1 is a schematic block diagram showing the structure of a prior art orthogonal frequency conversion apparatus on the transmitter side;

Figure 2 is a schematic block diagram showing the structure of the transmission BB frequency converter 1 in Figure 1;

Figure 3 is a schematic block diagram showing the structure of the transmission radio/intermediate frequency converter 2 in Figure 1;

Figure 4 is a schematic block diagram showing the structure of a prior art orthogonal frequency conversion apparatus on the receiver side;

Figure 5 is a schematic block diagram showing the structure of the receiver radio/intermediate frequency converter 6 in Figure 4;

Figure 6 is a schematic block diagram showing an embodiment of the orthogonal frequency conversion apparatus on the transmitter side of the present invention;

Figure 7A is a frequency spectrum of a baseband frequency on the transmitter side showing the operation of the embodiment according to the present invention;

Figure 7B is a frequency spectrum of a radio/intermediate frequency on the transmitter side showing the operation of the embodiment according to the present invention;

Figure 7C is a frequency spectrum of a radio/intermediate frequency on the transmitter side showing the operation of the embodiment according to the present invention;

Figure 8 is a schematic block diagram showing an embodiment of the orthogonal frequency conversion apparatus on the transmitter side of the present invention;

Figure 9A is a frequency spectrum of a radio/intermediate frequency on the receiver side showing the operation of the embodiment according to the present invention;

Figure 9B is a frequency spectrum of a radio/intermediate frequency on the receiver side showing the operation of the embodiment according to the present invention; and

Figure 9C is a frequency spectrum of a baseband frequency on the receiver side showing the operation of the embodiment according to the present invention.

One embodiment of the present invention will be explained below by referring to the accompanying drawings.

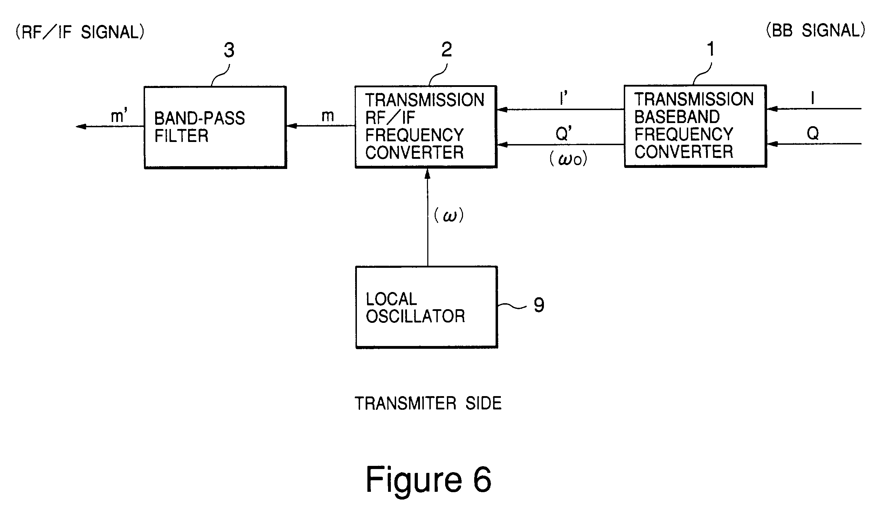

In Figure 6, the steps for frequency-converting the two input signals by the transmission BB frequency converter 1 for the baseband and thereafter frequency-converting the results by the transmission RF/IF frequency converter 2 in the radio section to obtain a signal m are similar to those in the prior art described in connection with Figure 1. However, this embodiment has a band-pass filter 3 which is added to an output of the transmission RF/IF frequency converter 2. That is, the signal m is input to the band-pass filter 3 which passes the frequency ($\omega+\omega_0$) but attenuates the frequency ($\omega-\omega_0$) to obtain a signal m' in which the spurious component is reduced.

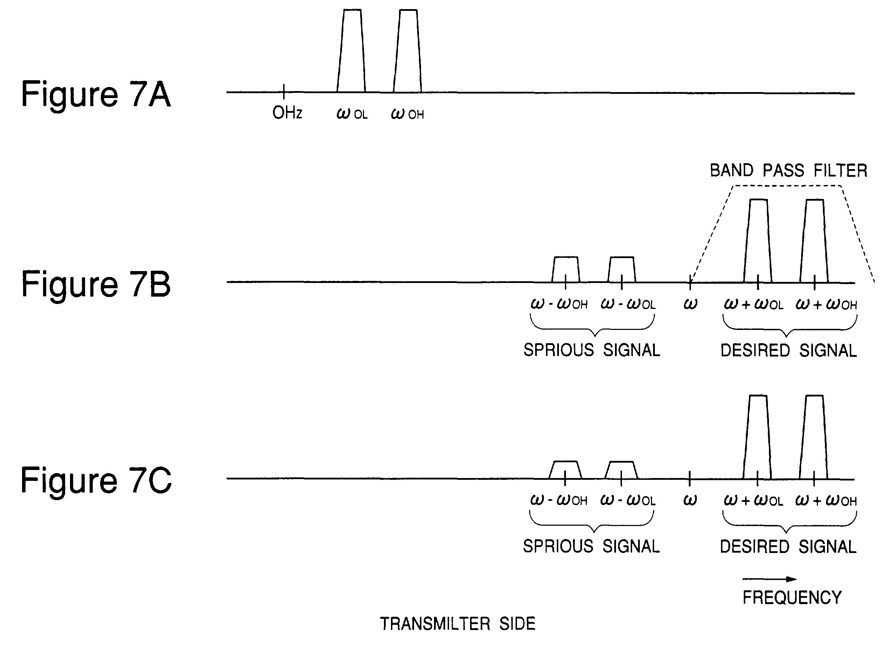

The operation of this embodiment according to the present invention will now be described with reference to Figure 7. Figure 7 is an explanatory view of a frequency spectrum showing the frequency conversion on the transmitter side.

As shown in Figure 7A, the transmitted data I and Q are subjected to orthogonal frequency conversion based on the frequency $\omega_0$ (the frequency is shown as a frequency band $\omega_{0L}-\omega_{0H}$ in Figure 7A) by the transmission BB frequency converter 1 for the baseband according to the arithmetic operation expressed by Equation (1) to obtain two different signals I' and Q', similar to the prior art system.

When effecting orthogonal frequency conversion on these signals based on the frequency $\omega$ in the transmission RF/IF frequency converter 2 in the radio section, similar to the prior art, a spurious component caused by the amplitude/phase error of the orthogonal frequency converter is generated in the frequency ($\omega-\omega_0$) as well as the frequency ($\omega+\omega_0$), as in the spectrum shown in Figure 7B. Thus, an output in which the spurious component is reduced can be obtained as shown in Figure 7C by attenuating the spurious component by the band-pass filter 4.

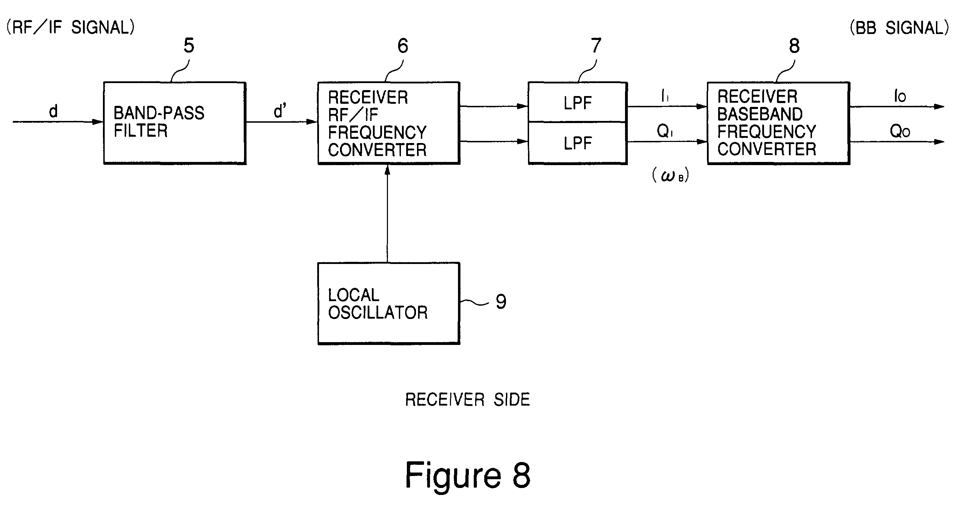

Figure 8 illustrates a schematic block diagram showing an orthogonal frequency conversion apparatus and method according to an embodiment of the present invention on the receiver side.

As shown in Figure 8, an input signal d is input to a band-pass filter 5 which passes the signal having the frequency $\omega$ but attenuates the frequency $\omega-2$ ($\omega-\omega_1$) to obtain an output d' in which the interference signal component is eliminated in advance. The two different signals which have been frequency-converted by the receiver RF/IF frequency converter 6 in the radio section are thereafter passed through an LPF 7 and further frequency-converted by the receiver BB frequency converter 8 for the baseband.

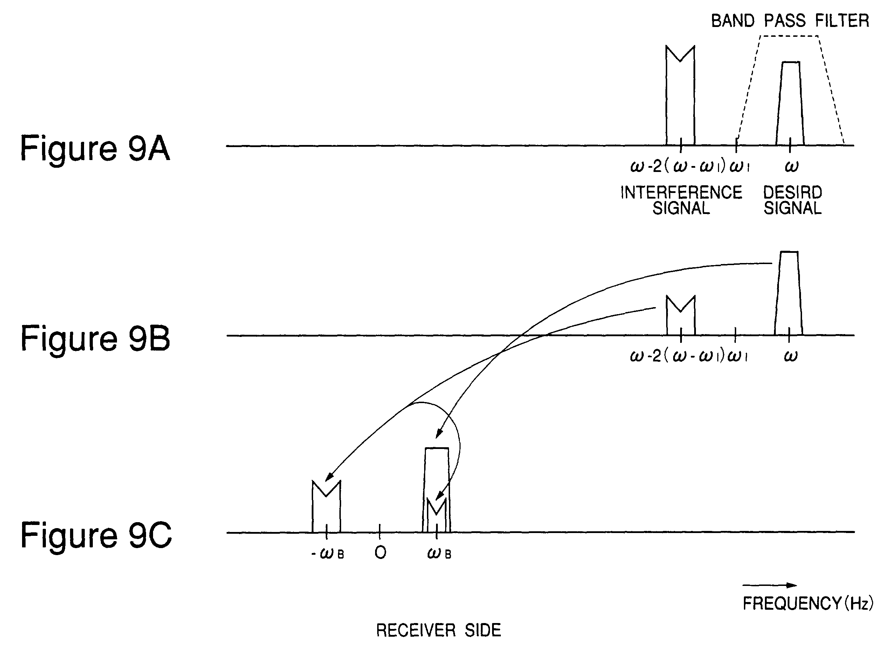

Figure 9 is an explanatory view of a frequency spectrum showing the frequency conversion on the receiver side. The band-pass filter 5 is first used to attenuate the signal having the frequency close to $\omega-2(\omega-\omega_1)$ which is the frequency of the interference signal as shown in Figure 9A. Hence, the level of the interference signal is attenuated by the band-pass filter 5 as shown in Figure 9B. Accordingly, when orthogonal frequency conversion is performed based on the frequency $\omega_1$ in the receiver RF/IF frequency converter 6 in the radio section, the level of the overlapping interference signal is decreased to a level which does not adversely affect a desired signal, as shown in Figure 9C. Finally, this signal is converted into the frequency of zero Hz by the receiver BB frequency converter 8 for the baseband to obtain a receive signal in which the interference component is eliminated

To better understand the present invention, a specific embodiment according to the mode of the present invention as shown in Figure 6 to 9 will now be described.

A specific embodiment on the transmitter side is explained using Figure 6 and 7. The transmission BB frequency converter 1 performs low-speed data transmission with two orthogonal transmission data I and Q being approximately 10kbps for example. Moreover, the conversion frequency $\omega_0$ of the transmission BB frequency converter 1 is subjected to the orthogonal frequency conversion based on a frequency band from 100kHz to 200kHz at 5kHz steps. The frequency $\omega$ of the local oscillator 4 is determined to be an IF band frequency 140MHz.

The band-pass filter 3 acts as a narrow band filter which passes a frequency of 140.15MHz±50kHz ($\omega+\omega_0$ but attenuates a frequency of 139.85MHz 50kHz ($\omega-\omega_0$. In this case, if the amount of attenuation outside the band is at least 30dB or more in the frequency 139.85MHz±50kHz, the problem of spurious radiation does not occur.

Use of an SAW filter (surface acoustic wave filter) can relatively easily achieve the above-described filtering characteristic.

A specific embodiment on the receiver side is now explained using Figure 8 and 9.

It is assumed that the input signal frequency $\omega$ is 140.15MHz±50kHz and the frequency $\omega_1$ of the local oscillator 9 is 140MHz. The band-pass filter 5 passes a signal having a frequency of 140.15MHz±50kHz ($\omega$) but attenuates the frequency of 139.85MHz±50kHz $\omega-2(\omega-\omega_1)$. A band-pass filter having the characteristic which is the same with that of the above-mentioned band-pass filter 3 on the transmitter side may be used as the band-pass filter 5 in order to suppress the interference wave component existing in 139.85MHz±50kHz.

As described above, the orthogonal frequency conversion apparatus according to the present invention can reduce the power of the spurious component with respect to the transmitted signal because the band-pass filter outputs only the signal to be transmitted in order to attenuate the spurious component on the transmitter side.

On the other hand, since only a desired signal is passed while the interference signal component is attenuated by the band-pass filter on the receiver side, deterioration caused by the interference signal can be avoided.

Modifications of the invention herein disclosed will occur to a person skilled in the art and all such modifications are deemed to be within the scope of this invention as defined by the appended claims.

**Claims**

1. An orthogonal frequency conversion apparatus, comprising:

   a transmission baseband (BB) frequency converter for frequency-converting two orthogonal data inputs to two orthogonal data outputs having conversion frequencies ($\omega_0$ varying in small steps;
   a transmission radio/intermediate (RF/IF) frequency converter for frequency-converting and modulating outputs of said transmission BB frequency converter to an orthogonal modulated signal in a RF/IF frequency ($\omega+\omega_0$; and
   a transmission band-pass filter for attenuating a spurious component of an output of said transmission RF/IF frequency converter.

2. The apparatus defined in claim 1 wherein said transmission band-pass filter has band limitation characteristics which pass a signal having said frequency ($\omega+\omega_0$ but attenuate a signal having a frequency ($\omega-\omega_0$ to reduce said spurious component.

3. The apparatus defined in claim 1 or 2, wherein said spurious component is generated by a phase error and an amplitude error of said transmission RF/IF frequency converter.

4. An orthogonal frequency conversion apparatus, comprising:

   a receiver band-pass filter for receiving orthogonal modulated signal and for passing portions of said modulated signal of frequency ($\omega$) and suppressing an interference signal component;
   a receiver RF/IF frequency converter for frequency-converting and demodulating said modulated signal to two orthogonal demodulated data based on a frequency ($\omega_1$ of a local oscillator; and
   a receiver BB frequency converter for frequency-converting an output of said receiver RF/IF frequency converter to a baseband data.

5. The apparatus defined in claim 4 wherein said receiver band-pass filter has band limitation characteristics which pass a signal having said frequency ($\omega$) but attenuate a frequency $\{\omega-2(\omega-\omega_1\}$ of said interference signal component.

6. The apparatus defined in claim 4 or 5, wherein said local oscillator is based on a carrier recovery circuit for demodulating said modulated signal in a synchronous detection.

7. An orthogonal frequency conversion apparatus, comprising:

   a transmission BB frequency converter for frequency-converting two orthogonal data inputs to two orthogonal data outputs having conversion frequencies varying in small steps;
   a transmission RF/IF frequency converter for frequency-converting and modulating outputs of said transmission BB frequency converter to an orthogonal modulated signal in a RF/IF frequency;
   a transmission band-pass filter for attenuating a spurious component of an output of said transmission RF/IF frequency converter;
   a receiver band-pass filter for receiving said modulated signal and for suppressing an interference signal component;
   a receiver RF/IF frequency converter for frequency-converting and demodulating two orthogonal input data to two orthogonal data; and
   a receiver BB frequency converter for frequency-converting output of said receiver RF/IF frequency converter to a baseband signal frequency.

8. A method of orthogonal frequency conversion, said method comprising:

   frequency-converting two orthogonal data inputs to two orthogonal data outputs having conversion frequencies in small steps;
   frequency-converting and modulating said converted orthogonal data to an orthogonal modulated signal in a radio/intermediate frequency band; and
   attenuating a spurious component contained in said orthogonal modulated signal.

9. A method of orthogonal frequency conversion, said method comprising:

   passing a modulated signal of frequency ($\omega$) and suppressing an interference signal component contained in said modulated signal;

   frequency-converting and demodulating said modulated signal to two orthogonal demodulated data outputs based on a frequency ($\omega_1$ of a local oscillator; and

   frequency-converting said demodulated data outputs to a baseband data.

10. A method of orthogonal frequency conversion, said method comprising:

   frequency-converting two orthogonal data inputs to two orthogonal data outputs having conversion frequencies varying in small steps;

   frequency-converting and modulating said converted orthogonal data to an orthogonal modulated signal in a RF/IF frequency band;

   attenuating a spurious component contained in said orthogonal modulated signal;

   passing said modulated signal of frequency ($\omega$) and suppressing an interference wave component contained in said modulated signal;

   frequency-converting and demodulating said modulated signal to two orthogonal demodulated data outputs based on a frequency ($\omega_1$ of a local oscillator; and

   frequency-converting said demodulated data outputs to a baseband data.

Figure 1 (PRIOR ART)

TRANSMITER SIDE

EP 0 865 182 A2

Figure 2 (PRIOR ART)

EP 0 865 182 A2

Figure 3 (PRIOR ART)

EP 0 865 182 A2

(RF/IF SIGNAL)

(BB SIGNAL)

Figure 4

RECEIVER SIDE

Figure 5 (PRIOR ART)

61 DIVIDER

62

MODULATED INPUT SIGNAL

I1

63

Q1

π/2 DELAY CIRCUIT

64

CARRIER RECOVER CIRCUIT

65

RECEVIER RF/IF FREQUENCY CONVERTER 6

FROM LOCAL OSCILLATOR 9

TO LOCAL OSCILLATOR 9

EP 0 865 182 A2

Figure 6

# Figure 7A

$0Hz \quad \omega_{OL} \quad \omega_{OH}$

BAND PASS FILTER

# Figure 7B

$\omega - \omega_{OH} \quad \omega - \omega_{OL} \quad \omega \quad \omega + \omega_{OL} \quad \omega + \omega_{OH}$

SPRIOUS SIGNAL       DESIRED SIGNAL

# Figure 7C

$\omega - \omega_{OH} \quad \omega - \omega_{OL} \quad \omega \quad \omega + \omega_{OL} \quad \omega + \omega_{OH}$

SPRIOUS SIGNAL       DESIRED SIGNAL

FREQUENCY

TRANSMILTER SIDE

(RF／IF SIGNAL)                                                                          (BB SIGNAL)

```
        5                    6                    7                    8
d    ┌──────────┐   d'   ┌──────────┐        ┌────────┐  I₁  ┌──────────┐   Io
──────│BAND-PASS │────────│RECEIVER  │────────│  LPF   │──────│RECEIVER  │──────→
      │FILTER    │        │RF／IF     │        ├────────┤      │BASEBAND  │   Qo
      └──────────┘        │FREQUENCY │        │  LPF   │──────│FREQUENCY │──────→
                         │CONVERTER │        └────────┘  Q₁  │CONVERTER │
                         └──────────┘                        └──────────┘
                              ↑                    (ωB)
                         ┌──────────┐
                         │LOCAL     │
                         │OSCILLATOR│──9
                         └──────────┘
```

RECEIVER SIDE

# Figure 8

EP 0 865 182 A2

BAND PASS FILTER

Figure 9A

$\omega - 2(\omega - \omega_1)\omega_1$    $\omega$

INTERFERENCE SIGNAL    DESIRD SIGNAL

Figure 9B

$\omega - 2(\omega - \omega_1)\omega_1$    $\omega$

Figure 9C

$-\omega_B$    O    $\omega_B$

FREQUENCY (Hz)

RECEIVER SIDE

EP 0 865 182 A2